Europäisches Patentamt

European Patent Office

Office européen des brevets

(11) Publication number: **0 035 564**
**B1**

(12) **EUROPEAN PATENT SPECIFICATION**

(45) Date of publication of patent specification: 02.01.85

(51) Int. Cl.⁴: **H 04 Q 3/02, H 03 K 23/00**

(21) Application number: **80901992.0**

(22) Date of filing: **29.08.80**

(86) International application number:
**PCT/US80/01113**

(87) International publication number:
**WO 81/00800 19.03.81 Gazette 81/07**

(54) **BINARY COINCIDENCE DETECTOR.**

(30) Priority: **12.09.79 US 75153**

(43) Date of publication of application:
**16.09.81 Bulletin 81/37**

(45) Publication of the grant of the patent:
**02.01.85 Bulletin 85/01**

(84) Designated Contracting States:
**DE FR GB**

(56) References cited:
**FR-A-2 180 988**
**US-A-3 604 911**
**US-A-3 760 355**
**US-A-3 801 956**
**US-A-4 038 540**

**N Communications Magazine; April 1979**
**"Digitally Coded Squelch System"**

(73) Proprietor: **GENERAL ELECTRIC COMPANY**
**1 River Road**
**Schenectady New York 12305 (US)**

(72) Inventor: **GARNER, Terry Neal**
**116 Forest Park Drive**
**Forest, VA 24551 (US)**

(74) Representative: **Schüler, Horst, Dr.**
**Kaiserstrasse 41**
**D-6000 Frankfurt/Main 1 (DE)**

Courier Press, Leamington Spa, England.

## Description

Background of the Invention

The invention relates to an improved binary coincidence detector according to the first part of claim 1. Such detector is described in US—A 3 801 956.

In some radio communication systems, it may be desirable or necessary that some transmissions on a particular radio carrier frequency be heard only by a selected receiver or receivers, and that some other transmissions on the same particular radio carrier frequency be heard by a different selected receiver or receivers. Such a system has been implemented by means of a continuous tone controlled squelch system, sometimes referred to as CTCSS. However, such systems have required audio tones of frequencies outside and usually below the range of the information or voice frequencies, and such frequencies are difficult to filter. For this reason, some of those systems use binary signals in which a predetermined binary word comprised of a predetermined number and arrangement of binary bits are continuously and repetitively transmitted. In such systems, only the radio receiver or receivers which are programmed to detect the predetermined binary word will be activated so that the transmission is heard.

Accordingly, a primary and general object of the invention is to provide a new and improved binary coincidence detector.

Another and more specific object of the invention is to provide a new and improved binary detector and threshold circuit for use in radio communication systems.

Another object of the invention is to provide a new and improved binary coincidence detector that can detect binary bits relatively accurately without the necessity of providing synchronization with the desired binary bit time interval.

In such a radio communication system, the signals representing the predetermined binary word are subject to fading and distortion in the radio transmission path. When these signals are demodulated, the binary bits which are reproduced may be inaccurate, so that a decision must be made whether to activate the receiver.

Accordingly, another object of the invention is to provide a new and improved binary coincidence detector for determining the binary significance of bits which may be distorted or deformed during a radio transmission.

Another object of the invention is to provide a new and improved binary signal threshold circuit that permits the threshold to accurately reflect operating conditions in a binary signal radio communication system.

Summary of the Invention

Briefly, these and other objects are achieved in accordance with the invention by an improved coincidence detector according to the second part of claim 1. Accordingly, the plurality of logic sampling means are connected to the input for producing phase shifted logic samples of each input bit at respective outputs. A shift register is respectively coupled to each of the sampling means outputs. The sampling means and shift registers ure respectively arranged so that the logic samples stored in each shift register are circulated, or so that each new sample is placed in the shift register and the oldest sample is removed from the shift register. A plurality of generating means are provided for producing the predetermined binary word. Comparing means are respectively coupled to the generating means and the shift registers for comparing the binary word in the generating means with the samples in the shift registers. The shift registers are operated at a rate greater than the rate of the input binary bits, so that the binary word in the generating means can be compared with every sequence of samples in the shift register between input bits. And finally, threshold means are connected to the comparing means for producing an output signal in response to a predetermined number of proper comparisons.

Brief Description of the Drawing

The subject matter which is regarded as the invention is particularly pointed out and distinctly claimed in the claims. The structure and operation of the invention, together with further objects and advantages, may be better understood from the following description given in connection with the accompanying drawing, in which:

FIGURES 1A and 1B show a diagram of an improved detecting circuit in accordance with the invention;

FIGURES 2A through 2G show wave forms for illustrating the operation of the detecting circuit of FIGURES 1A and 1B;

FIGURE 3 shows a diagram of an improved threshold circuit in accordance with the invention for use with the detecting circuit of FIGURES 1A and 1B, and

FIGURES 4A through 4F show wave forms for illustrating the operation of the threshold circuit of FIGURE 3.

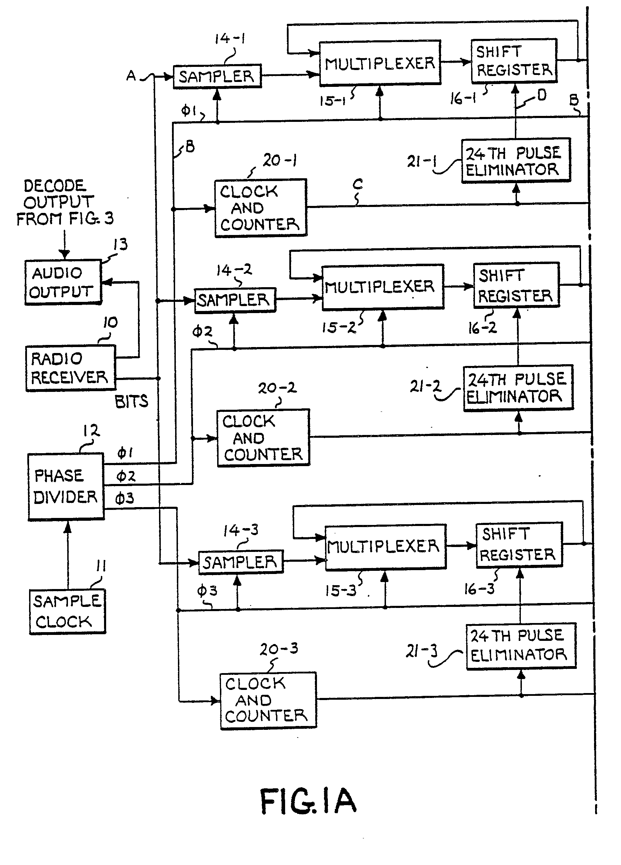

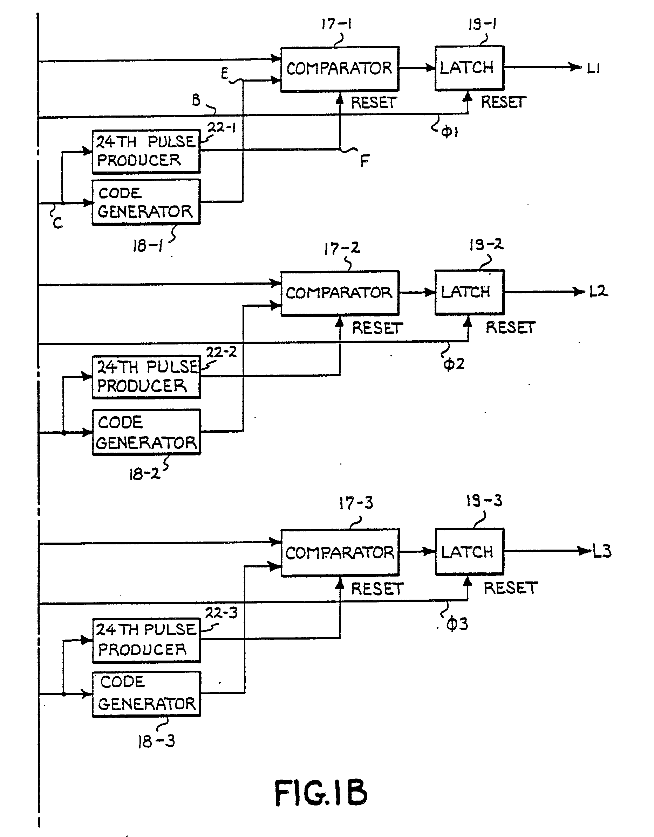

FIGURES 1A and 1B are to be considered together, with the right hand leads of FIGURE 1A being connected to the respectively positioned left hand leads of FIGURE 1B. As mentioned earlier, the invention is intended for use in a radio communication system in which a predetermined binary word having a plurality of binary bits is repetitively transmitted to activate or energize the output of a selected radio receiver or receivers. Since the binary bits can be used to modulate radio frequency carriers in various ways, such as amplitude or frequency modulation, a radio receiver 10 is shown, which may demodulate any desired type of signals and produce these signals in appropriate form. In the receiver 10, the binary bits are produced at one output and the audio information or intelligence is produced at a second output. The two outputs are preferably filtered so as not to interfere with each other. The audio output is applied to an audio output circuit 13 which is enabled to produce an output in response to a decode signal. To provide a sufficient number of distinct binary words, it is assumed that each repeated binary word comprises 23 binary bits having logic 1's and 0's in a predetermined sequence to form a predetermined binary word. However, a word could include more or less bits. These binary bits are assumed to have a bit rate BR, which typically may be 135 bits per second. Common to the described circuit is a sample clock 11 which produces pulses at a rate that is an integral multiple greater than the bit rate BR. A plurality of similar circuits is included, for example three, each of which is supplied with the received binary bits and samples them at a time that is shifted with respect to the other circuits. The embodiment shown, uses three such circuits so that the sample clock 11 operates at a rate three times the bit rate BR. While the rate of the sample clock 11 is preferably very accurate, the actual time that each clock pulse is produced relative to the time a binary bit begins does not have to be controlled. That is, the clock pulses do not have to be synchronized with the binary bits. This sample clock 11 is connected to a phase divider 12 having three outputs, each of which produces output pulses at the bit rate BR, these pulses being time or phase shifted relative to the other pulses. Thus, the phase divider 12 produces respective short duration signals $\emptyset1$, $\emptyset2$ and $\emptyset3$, each having a rate BR and phase relations that are preferably 120 degrees apart. It is to be understood that more or less circuits can be used, for example 2 or 4 or more such circuits. For a given plurality N, the phase divider 12 would produce N different outputs, each having a rate Br and a phase relation of 360 degrees/N with respect to the other outputs. Each output from the divider 12 is applied to a respective circuit. For the phase 1 ($\emptyset1$) output, this circuit is shown horizontally across the top portion of FIGURES 1A and 1B. The phase 2 ($\emptyset2$) circuit is shown horizontally across the center portion of FIGURES 1A and 1B, and the phase 3 ($\emptyset3$) circuit is shown horizontally across the lower portion of FIGURES 1A and 1B. Each of these circuits is substantially similar. Corresponding circuit elements are given the same reference numeral, this numeral being followed by a suffix numeral 1, 2 or 3 which respectively indicates $\emptyset1$, $\emptyset2$ or $\emptyset3$. For the $\emptyset1$ circuit, binary data bits from the radio receiver 10 are applied to a sampler circuit 14—1. This sampler circuit 14—1 takes a sample of the binary logic of the binary data bits under the control and at the time of the $\emptyset1$ signal or pulse from the phase divider 12. The samples taken are applied to a multiplexer 15—1. The multiplexer 15—1 is essentially a single pole, double throw switch having one input terminal connected to the sampler 14—1, and the other input terminal connected to the output of a shift register 16—1. The output terminal of the multiplexer 15—1 is connected to one of its input terminals under the control of the $\emptyset1$ pulse from the phase divider 12. The output signals from the multiplexer 15—1 are applied to the input of the shift register 16—1. If, as assumed above, the predetermined binary word comprises 23 bits having a predetermined sequence of 1's and 0's, then the shift register 16—1 comprises 23 stages. In addition to being applied to the multiplexer 15—1, the output of the shift register 16—1 is also applied to one input of a comparator circuit 17—1. The other input for the comparator circuit 17—1 is derived from a code generator 18—1 also referred to a reference bit sequence source apparatus which sequentially produces the binary bits forming the predetermined binary word. The comparator 17—1 compares the logic of the two bits applied to its inputs, and produces one output if the bit logic is the same and a different output if the bit logic is different. The comparator 17—1 may include a counter or similar circuit which, in response to a predetermined number of outputs indicating proper comparisons between bits from the shift register 16—1 and bits from the code generator 18—1, produces an output. This output is applied to a latch circuit 19—1 also referred to as coincidence indication storage latch device which produces an output L1 for a selected time period of at least the remaining time of the bit in which the comparator 17—1 produced an output, plus the time of one more bit.

Phase 1 pulses or signals from the phase divider 12 are also applied to a clock and counter circuit 20—1 also referred to as control bit sequence generator. This circuit 20—1 produces a stream of clock pulses at a rate higher than the bit rate BR of the $\emptyset1$ pulses from the phase divider 12. For a 23 bit word, this rate is preferably at least 23 × 24 × BR, where 23 is the predetermined number of bits forming the binary word, and 24 is 23 + 1 to give added pulses for reasons that will be explained. For a bit rate BR of 135 pulses per second, the circuit 20—1 produces pulses at a rate of 23 × 24 × 135 or 74,520 pulses per second. On a receipt of a $\emptyset1$ signal, the circuit 20—1 produces 23 × 24 or 552 pulses at its output, after which no more pulses are produced until another $\emptyset1$ signal is applied. The circuit 20—1 produces these 552 pulses at the 74,520 pulses per second rate in response to each $\emptyset1$ signal from the phase divider 12. These counted pulses are applied to a pulse eliminator circuit 21—1 and to a pulse producer circuit 22—1. The pulse eliminator circuit 21—1 eliminates one pulse out of every 24 supplied to it, and supplies the remaining pulses to the clock input of the shift register 16—1. The pulse producer circuit 22—1 produces a single pulse in response to every 24 pulses applied to it, and supplies each of these single pulses to the reset input of the comparator 17—1. The Ø1 signals are also applied to the reset input of the latch circuit 19—1.

The other portions of the circuit for phase 2 (Ø2) and phase 3 (Ø3) pulses or signals are similar to that described for phase 1 (Ø1) signals. If more phases are used, each additional circuit would be similar. All of the circuits operate in a similar manner, but would be started at displaced time relations or phases, the exact time or phase depending on the number of phases or samples desired. For three phases, the time relation would be 120 degrees. For two phases, the time relation would be 180 degrees. These multiple phase samplings eliminate the need for any synchronization with the incoming binary data bits, and provide sufficient samples so that an accurate representation of each bit is obtained, despite any distortion or fading to which the bit may have been subjected.

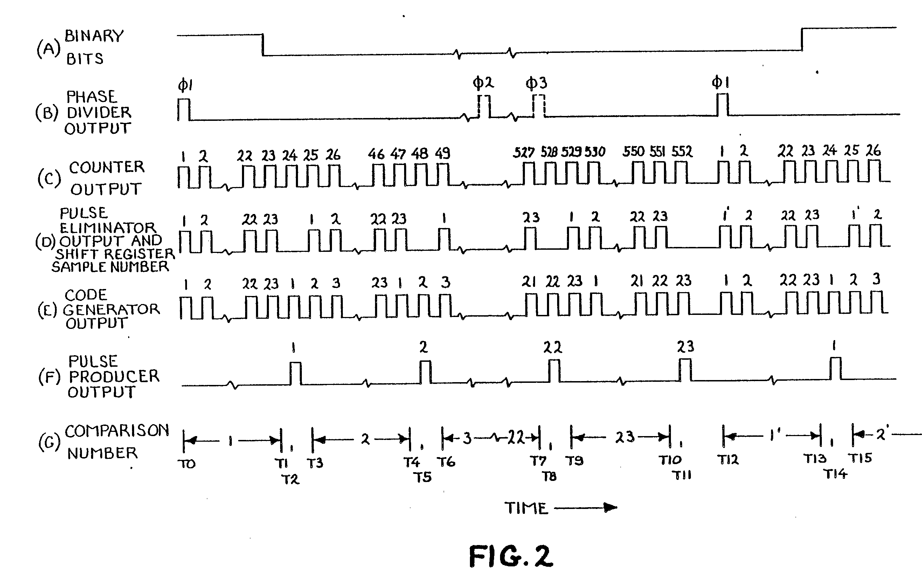

The operation of the phase 1 portion of this circuit is explained in connection with the wave forms shown in FIGURES 2A through 2G which are plotted along a common time axis. FIGURE 2A shows a portion of a received binary data bit; FIGURE 2B shows pulses produced by the phase divider 12; FIGURE 2C shows pulses produced by the clock and counter circuit 20—1; FIGURE 2D shows pulses produced by the pulse eliminator 21—1 and the bit sample number produced by the shift register 16—1; FIGURE 2E shows the predetermined bit number produced by the code generator 18—1; FIGURE 2F shows the pulses produced by the pulse producer 22—1; and FIGURE 2G shows the time occurrence of comparisons taking place in the comparator 17—1. The locations of these waveforms are shown by corresponding letters in FIGURES 1A and 1B.

Prior to the time T0, it is assumed that the circuit has been operating long enough to have filled the shift register 16—1 with bit samples. At the time T0, it is assumed that the phase divider 12 produces a Ø1 pulse shown in FIGURE 2B. This Ø1 pulse does several things. It causes the sampler 14—1 to take a binary sample of the binary bit being received, and also causes the multiplexer 15—1 to switch its input from the shift register output to the sampler output so that the binary sample is applied to the shift register 16—1 at this time. If, as assumed, the shift register 16—1 is full, this latest sample replaces the oldest sample because the timing in the shift register 16—1 is under control of the Ø1 pulses. The Ø1 pulse causes the counter 20—1 to begin producing the counted stream of 23 × 24 or 552 pulses shown in FIGURE 2C. These counted pulses cause the code generator 18—1 to being producing the sequence of predetermined binary bits forming the binary word. The sequence output of these bits is shown in FIGURE 2E. These same counted pulses are also applied to the pulse eliminator 21—1 and to the pulse producer circuit 22—1. The pulse eliminator 21—1 eliminates every 24th pulse as shown in FIGURE 2D, and the pulse producer circuit 22—1 produces a single pulse every 24 pulses, as shown in FIGURE 2F. In comparison 1 indicated between the times T0 and T1 in FIGURE 2G, bit samples 1 through 23 produced by the shift register 16—1 (as shown by the numbers in FIGURE 2D) are respectively compared with the predetermined code bits 1 through 23 produced by the generator 18—1 (as shown by the numbers in FIGURE 2E) in the comparator 17—1. Samples 3 through 21 and code bits 3 through 21 are omitted to save space. If a predetermined number of comparisons are proper, that is if binary 1's or 0's from the shift register 16—1 occur at the same time as binary 1's or 0's from the code generator 18—1, the comparator 17—1 produces an output that causes the latch circuit 19—1 to latch and produce an output L1. This predetermined number of proper comparisons may have any value, although 21 is preferred. After comparison 1 is completed, and at the time T2, counter pulse 24 is eliminated from the shift register 16—1. However, this pulse 24 is supplied to the code generator 18—1, so that predetermined code bit 1 is still produced even though no new bit sample is produced by the shift register 16—1. This pulse 24 is also supplied to the pulse producer 22—1 which produces a pulse 1 (FIGURE 2F) that resets the count in the comparator 17—1 to zero. This count reset eliminates any ambiguity or error which might result from bit sample 23 (produced by the shift register 16—1) being compared with code bit 1 (produced by the code generator 18—1) at the time T2. At the time T3, the counter 20—1 produces pulse 25 to start comparison 2. This pulse 25 is produced as pulse 1 by the pulse eliminator 21—1, and causes the shift register 16—1 to produce bit sample 1. This pulse 1 also causes the code generator 18—1 to produce code bit 2, since code bit 1 was produced in response to pulse 24. During comparison 2, bit sample 1 is compared with code bit 2, bit sample 2 is compared with code bit 3, and so on until bit sample 22 is compared with code bit 23, and bit sample 23 is compared with code bit 1. Thus in comparison 2, the bit number forming the predetermined code and the bit numbers of the samples are shifted with respect to each other after comparison 1. Comparison 2 ends at the time T4. At the time T5, counter pulse 48 is eliminated so that shift register pulse 23 remains. Also, pulse producer pulse 2 is produced to reset the comparator 17—1. At the time T6, counter pulse 49 starts the third comparison of bit sample 1 and code bit 3, and so on. This operation continues on for additional comparisons through comparison 22 which ends at the time T7. Between the times T6 and T7, similar operations begin with phase divider pulses Ø2 and Ø3 and the remainder of the circuits of FIGURES 1A and 1B. At the time T8, counter pulse 528 is eliminated, and pulse producer pulse 22 is produced to reset the comparator 17—1. At the time T9, counter pulse 529 starts the 23rd comparison of bit sample 1 and code bit 23, and so on ending with bit sample 23 and code bit 22 at the time T10. At this time T10, 551 counter pulses have been used, and every possible predetermined code bit sequence, each beginning with a different code bit but in the same predetermined order, has been compared with the same sequence of bit samples in the shift register 16—1. Since 23 bits form a binary word, there are 23 different bits that the sequence can start with. Consequently, all 23 comparisons must be made in the time of one binary bit. While each of the comparisons described above started with a different code bit but the same bit sample, it will be appreciated that each comparison could have started with a different bit sample but the same code bit. As shown in FIGURE 2D, comparison 1 begins with bit sample 1 and code bit 1; comparison 2 begins with bit sample 1 and code bit 2; comparison 3 begins with bit sample 1 and code bit 3; and so on to comparison 22 which begins with bit sample 1 and code bit 22; and finally comparison 23 which begins with bit sample 1 and code bit 23. At the time T11, counter pulse 552 (the last of a clock sequence) is produced. This pulse 552 causes the pulse producer 22—1 to produce pulse 23 which resets the comparator 19—1. After this time bit sample 1 is at the output of the shift register 16—1, and code bit 1 is at the output of the code generator 18—1.

During comparisons 1 through 23 each of the pulse producer pulses 1 through 23 resets the comparator 17—1, so that the count in the comparator 17—1 can start over for each comparison sequence. Actually, only one sequence out of the 23 sequences should or will be correct. For that correct sequence, 23 correct comparisons should be made by the comparator 17—1. Hence, any reasonable count or threshold, such as 20 or 21, in the comparator 17—1 may be required for the comparator 17—1 to produce an output. This output can be used to set the latch 19—1 to provide a high output L1 indicating proper comparison. If, after a reset, 20 or 21 correct bit comparisons are made in a sequence, the chances are great that all bit comparisons in that same sequence will also be correct. Persons skilled in the art will appreciate the relative merits of having a high threshold in the comparator for accuracy, as opposed to a low threshold in the comparator in order to produce a rapid output so that the receiver or other device is activated or energized.

At the time T12, another phase divider $\emptyset 1$ pulse is produced. This causes the sampler 14—1 to sample the logic of the binary bit being received, and causes the multiplexer 15—1 to connect the shift register input to the sampler 14—1 and receive the new bit sample 1' in the place of the old bit sample 1. The logic of the other bit samples 2 through 23 remain the same. This $\emptyset 1$ pulse resets the latch 19—1, and starts the clock and counter 20—1 to produce another 552 pulses that produce 23 comparisons as described above. $\emptyset 2$ and $\emptyset 3$ pulses are also produced to cause their respective circuits to function in the same way. However, as mentioned earlier, the respective phases 2 and 3 are operated at 120 degree relationships with each other and with respect to phase 1. Thus, with multiple sampling of each binary bit at multiple phase relations, the logic samples of the binary bits will be averaged or corrected. If any one or more latch outputs are produced, an indication can be provided to a receiver or other device that the proper binary word is present, and this indication can be used to enable the output circuit 13 of the receiver 10, and provide a listener with the received intelligence or other information. However, in applications where a more accurate way is needed to determine when a receiver should be activated, it is preferred to use a threshold circuit such as described below.

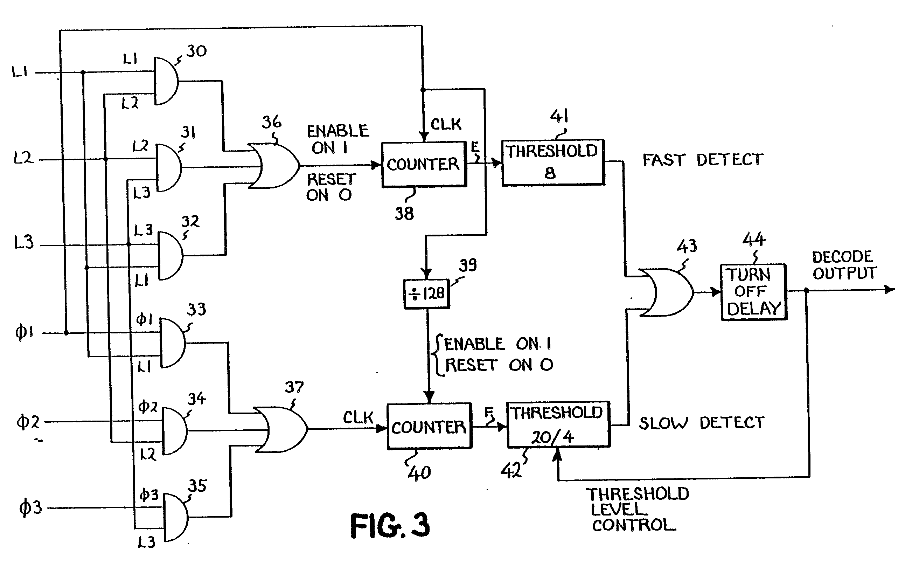

FIGURE 3 shows a circuit diagram of a preferred threshold circuit in accordance with the invention for use with the detecting circuit of FIGURES 1A and 1B. The threshold circuit utilizes a plurality of two input AND gates 30 through 35. The inputs of gate 30 are coupled to latch circuits 19—1, 19—2; the inputs of gate 31 are coupled to latch circuits 19—2, 19—3; and the inputs to gate 32 are coupled to latch circuits 19—3, 19—1. The outputs of these AND gates 30, 31, 32 are coupled to a three input OR gate 36. The output of the OR gate 36 is applied to the enable input of a counter 38 which is driven by the $\emptyset 1$ clock pulse. The output of the counter 38 is applied to a threshold circuit 41 which produces an output in response to a predetermined count, for example 8. This part of the circuit forms a fast detect circuit. The output of the threshold circuit 41 is applied to one input of an OR gate 43. The output of the OR gate 43 is applied to a turn-off delay circuit 44 which produces a decode signal in response to an output from the OR gate 43, and continues to produce this decode signal for a predetermined time period following removal of the output from the OR gate 43.

The threshold detect circuit also includes a slow detection circuit. In this part of the circuit, the AND gates are connected to the phase divider 12 and the latches 19—1, 19—2, 19—3, so that AND gate 33 receives the $\emptyset 1$ and L1 signals; AND gate 34 receives the $\emptyset 2$ and L2 signals; and AND gate 35 receives the $\emptyset 3$ and L3 signals. The outputs of these AND gates 33, 34, 35 are applied to an OR gate 37 which provides a clocking signal to a counter 40. This counter 40 is enabled as long as an enabling signal is supplied from a divide-by-128 circuit 39. The circuit 39 counts the $\emptyset 1$ signals,

and produces an enabling signal until a count of 128 is reached, after which it produces a reset signal. As soon as another Ø1 signal is received, the divider 39 produces an enabling signal again for another 128 Ø1 signals. The output of the counter 40 is applied to a threshold circuit having two levels of 20 and 4 as will be explained. If, as the case may be, an appropriate count is received, the threshold circuit 42 produces an output which is supplied to the OR gate 43. The threshold circuit 42 requires a count of 20 if a decode signal is not produced. As soon as a decode signal is produced, the required threshold count is reduced to 4. Thus, if a decode signal is lost, the slow detect threshold circuit 42 requires a count of 20 before providing an enabling signal to the OR gate 43. Once a decode signal is produced, the slow detect threshold circuit 42 requires a count of 4, so that a decode signal will continue to be produced if the counter 40 produces 4 outputs before the counter 40 is reset.

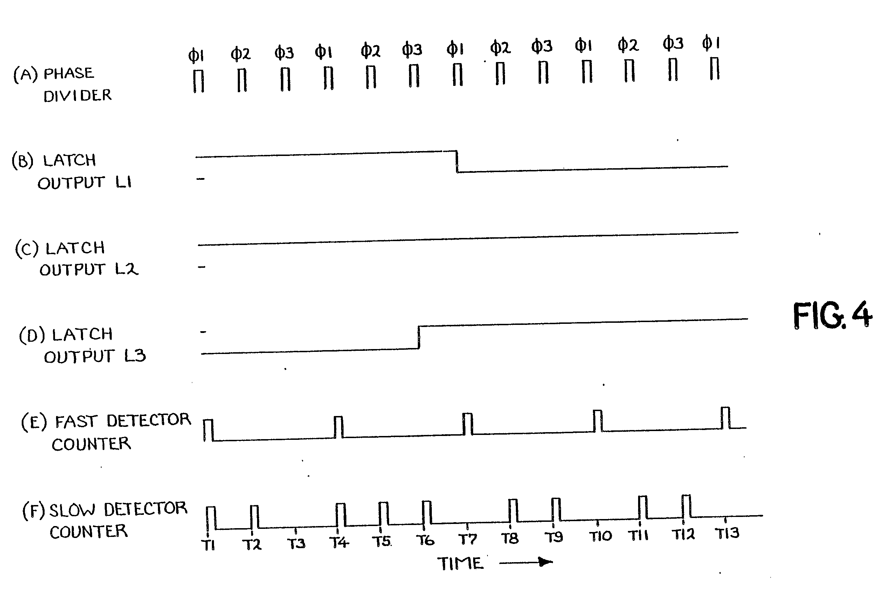

The operation of the threshold circuit of FIGURE 3 will be explained in connection with the wave form shown in FIGURES 4A through 4F, plotted along a common time axis. FIGURE 4A shows the Ø1, Ø2, Ø3 signals produced by the divider 12 of FIGURE 1A. FIGURES 4B, 4C and 4D show assumed output latch signals L1, L2, L3 for the latch circuits 19—1, 19—2 and 19—3 of FIGURE 1B. FIGURE 4E shows the count outputs produced by the fast counter 38, and FIGURE 4F shows the outputs produced by the slow counter 40.

Just prior to the time T1, it is assumed that the latch signals L1, L2 are high (indicating that the Ø1 and Ø2 bit samples agree with the predetermined bit code), and that the latch signal L3 is low (indicating that the Ø3 bit samples disagree with the predetermined bit code). When the Ø1 signal appears at the time T1, the AND gate 30 is producing a logic 1 which is passed by the OR gate 36 to enable the fast counter 38 to produce a count as shown in FIGURE 4E. Also, a logic 1 at L1 allows AND gate 33 to produce a phase 1 clock pulse which is passed by the OR gate 37 to cause the slow counter 40 to produce a count as shown in FIGURE 4F. At the time T2, the fast counter 38 does not produce an output even though enabled, since no Ø1 clock signal is applied to the counter 38. However, the slow counter 40 does produce an output since the Ø2 signal and the latch signal L2 are high to cause the gate 34 to produce an output. At the time T3, the fast counter 38 produces no output since no Ø1 clock signal is applied to the fast counter 38. The slow counter 40 produces no output, since the latch signal L3 is assumed to be low at the time of the Ø3 signal. At the time T4, both the fast and slow counters 38, 40 produce a count signal for the same conditions which existed at the time T1. A slow count is produced at the time T5 as at the time T2.

At time T6, a slow count signal is produced since the latch signal L3 is assumed to have become high before the Ø3 signal is produced. No fast count is produced because no Ø1 signal is present. With respect to the time T7, it is assumed that the comparator 17—1 does not produce an output after the time T3 and before the time T4, so that the latch 19—1 produces a low L1 output at the time T7. Hence, the slow counter 40 does not produce a count at the time T7. The fast counter 38 does produce a count at the time T7 because of the high latch signals L2 and L3.

At the time T8, the slow counter 40 produces a count because the Ø2 signal and high latch signal L2 are present. No fast count is produced, since the Ø1 signal is not present. At the time T9, the slow counter 40 produces an output because of the Ø3 signal and the high latch signal L3. No fast count is produced, since the Ø1 signal is not present. At the time T10, the fast counter 38 produces a count in response to the Ø1 clock signal and the high latch signals L2, L3. No slow count is produced since the latch signal L1 is low. At the time T11, the slow counter 40 produces a count in response to the Ø2 signal and the high latch signal L2. No fast count is produced, since the Ø1 signal is not present. At the time T12, the slow counter 40 produces a count in response to the Ø3 and high L3 signals. And, at the time T13, the fast counter 38 produces a count in response to the Ø1 signal and the high latch signals L2, L3. Other conditions are also possible. But if 8 fast counts or 20 slow counts are produced, a decode signal is produced to enable the audio output circuit 13 of the receiver 10.

This threshold circuit is ideal for radio receiving conditions, and provides the best balance and selection between fast operation for rapid receiver activation on the one hand, and for reliability under fading or adverse conditions on the other.

Thus, a new and improved detecting circuit and threshold circuit has been shown and described. While only one embodiment of the circuit is shown, persons skilled in the art will appreciate the modifications that may be made without departing from the spirit of the invention. In particular, the detecting circuit may use any number of phase signals, depending upon design preference. However, three equally spaced phase signals seem to provide an optimum choice. Similarly, in other modifications of the threshold circuit, either the fast threshold circuit or the slow threshold circuit could be omitted.

**Claims**

1. A coincidence detector for bit sequences wherein an incoming bit sequence having a predetermined nominal bit rate is compared with a reference bit sequence, characterized in that a plurality of binary bit samplers (14), each having respective individual inputs connected in parallel with the incoming bit sequence and each providing an output representing the binary value of the input bit sequence at a succession of sampling times defined by a sampler control signal input thereto, a source (11, 12) of phase displaced sampler control signals recurring at a frequency approximating said nominal bit rate having respective plural phase displaced outputs, each being connected with a respective one of said sampler control signal input, plural bit storage registers (15, 16), each register being connected with the respective output of a corresponding one of said samplers (14) for storing a succession of output signal values from its respectively corresponding sampler (14), plural comparators (17) each having a first input connected to receive the sequentially shifted outputs of a respectively corresponding one of said bit storage registers (15, 16), each comparator (17) also having a second input for receiving a sequence of reference signals to be synchronously compared to the sequence of signals presented to said first input and each comparator (17) also having an output providing an output signal after a predetermined number of successive favorable bit comparisons,

reference bit sequence source apparatus (18) connected with said second inputs to said comparators (17), plural coincidence indication storage latch devices (19), each being connected with a respective output of said comparators (17), and

control output signal generating apparatus (Fig. 3) connected with said coincidence indication storage latch devices (19) for generating a predetermined signal in response to a predetermined logical combination of the contents of said plural coincidence indication storage latch devices (19).

2. A coincidence detector according to claim 1, characterized in that said source of phase displaced sampler control signals includes means for producing "P" differently phased outputs, where "P" is an odd number, and said control outputs signal generating apparatus (Fig. 3) includes means for emitting a signal in response to the presence of favorable coincidence indications stored in a majority of said coincidence indication storage latch devices (19).

3. A coincidence detector according to claim 2, characterized in that said reference bit sequence source apparatus (18) includes separate source means individually associated with each comparator.

4. A coincidence detector according to claim 1, characterized in that said bit storage registers (15, 16) are shift registers.

5. A coincidence detector according to claim 4, characterized in that the shift register loop has a capacity of "N" bits.

6. A coincidence detector according to either claim 4 or 5, characterized in that there is a control bit sequence generator (20) connected with each phase displaced output of said sampler control signal source and said control bit sequence generator (20) produces in response to each sampler control signal a control bit sequence having at least "N" bits where "N" is the length of the analyzed bit sequence, at a bit rate substantially greater than the nominal bit rate of the analyzed bit sequence, and said control bit sequences drive the respective associated shift registers (15, 16).

7. A coincidence detector according to claim 6, wherein said control bit sequence generators (20) include means for producing a pulse group having "N" × (N + 1) pulses in response to each sampler control signal where "N" is the number of bits in an analyzed bit sequence.

8. A coincidence detector according to claim 7, wherein said control bit sequence generators (20) include means for suppressing each (N + 1)th pulse in the control pulse train driving the shift registers (15, 16).

9. A coincidence detector according to claim 8, wherein said control bit sequence generators (20) each produce a (N + 1)th pulse in the control bit sequence which is connected to re-set a corresponding comparator (17).

10. A coincidence detector according to claim 9, wherein each coincidence indication storage latch device (19) is connected to be re-set by the sampler control signals input to its respectively corresponding sampler (14).

11. A coincidence detector according to any of the foregoing claims characterized in that the control output signal generating apparatus includes "P" AND gates (30, 31, 32) each with (P − 1) inputs, where "P" is the number of differently phased sampler control signals, an OR gate (36) connects the outputs of said AND gates to an output counter (38) and a numerical threshold device (41) is connected between said output counter and a control output signal line.

12. A coincidence detector according to claim 11, characterized in that said numerical threshold device (41) delivers a signal when the count in the associated output counter has a predetermined value greater than 1 and less than "N" where "N" is the number of bits in the analyzed bit train.

13. A coincidence detector according to any of claims 1 to 5, characterized in that the control output signal generating apparatus (Fig. 3) includes:

AND gates (33, 34, 35) having a first set of inputs fed from each different one of the coincidence indication storage latch devices (19) and another second set of inputs fed with the corresponding phase sampler control signals, an OR gate (37) connecting the outputs of said AND gates (33, 34, 35) to an output counter (40) and a numerical threshold device (42) connected between the output of said output counter (40) and a control output signal line, said threshold device (42) delivering a signal to said control output signal line when the count in said output counter (40) exceeds a predetermined numerical value M greater that 1 and less than "N" where N is the number of bits in the analyzed bit sample.

14. A coincidence detector according to claim 13, characterized in that said threshold device (42) is settable to function at different predetermined numerical values M and M' where M' is less than M.

15. A coincidence detector according to claim 14, characterized in that said output control signal line feeds a signal maintaining delay circuit (44), the numerical threshold of said settable numerical threshold device (42) normally being at the higher threshold level M, and the appearance of a signal at the output of said signal maintaining delay circuit (44) being effective to reduce the numerical value for actuation of said threshold device (42) to a lower value M'.

16. A coincidence detector according to claim 15 together with any of claims 11—12, characterized in that the output lines from said numerical threshold devices (41, 42) are connected through an OR gate (43) with the input to said signal maintaining delay circuit (44).

**Revendications**

1. Un détecteur de coïncidence pour des séquences de bits, dans lequel une séquence de bits entrante ayant une cadence de bit nominale prédéterminée est comparée avec une séquence de bits de référence, caractérisé en ce qu'il comprend:

un ensemble d'échantillonneurs de bits (14), ayant chacun des entrées individuelles respectives connectées en parallèle pour recevoir la séquence de bits entrante, et chacun fournissant un signal de sortie qui représente la valeur binaire de la séquence de bits d'entrée, à une succession d'instants d'échantillonnage définis par une entrée de signal de commande échantillonneur,

une source (11, 12) de signaux de commande d'échantillonneur déphasés, se répétant à une fréquence approximativement égale à la cadence de bit nominale, comportant plusieurs sorties respectives déphasées, chacune d'elles étant connectée à une entrée respective parmi les entrées de signal de commande d'échantillonneur,

plusieurs registres de mémorisation de bits (15, 16), chaque registre étant connecté à la sortie respective de l'un correspondant des échantillonneurs (14) pour mémoriser une succession de valeurs de signal de sortie provenant de l'échantillonneur respectif (14),

plusieurs comparateurs (17) ayant chacun une première entrée connectée de façon à recevoir les signaux de sortie décalés séquentiellement de l'un respectif des registres de mémorisation de bits (15, 16), chaque comparateur (17) ayant également une seconde entrée destinée à recevoir une séquence de signaux de référence à comparer en synchronisme avec la séquence de signaux qui est présentée sur la première entrée, et chaque comparateur (17) ayant également une sortie qui fournit un signal de sortie après un nombre prédéterminé de comparaisons de bit favorables successives,

une source de séquence de bits de référence (18) connectée aux secondes entrées des comparateurs (17),

plusieurs bascules d'enregistrement d'indication de coïncidence (19), chacune d'elles étant connectée à une sortie respective des comparateurs (17), et

un générateur de signal de sortie de commande (figure 3) qui est connecté aux bascules d'enregistrement d'indication de coïncidence (19) pour produire un signal prédéterminé sous l'effet d'une combinaison logique prédéterminée des contenus des différentes bascules d'enregistrement d'indication de coïncidence (19).

2. Un détecteur de coïncidence selon la revendication 1, caractérisé en ce que la source de signaux de commande d'échantillonneur déphasés comprend des moyens destinés à produire "P" signaux de sortie ayant des phases différentes, en désignant par "P" un nombre impair, et le générateur de signal de sortie de commande (figure 3) comprend des moyens destinés à émettre un signal sous l'effet de la présence d'indications de coïncidences favorables enregistrées dans une majorité des bascules d'enregistrement d'indication de coïncidence (19).

3. Un détecteur de coïncidence selon la revendication 2, caractérisé en ce que

la source de séquence de bits de référence (18) comprend un élément de source séparé associé individuellement à chaque comparateur.

4. Un détecteur de coïncidence selon la revendication 1,

caractérisé en ce que les registres de mémorisation de bits (15, 16) sont des registres à décalage.

5. Un détecteur à coïncidence selon la revendication 4, caractérisé en ce que

la boucle de registre à décalage à une capacité de "N" bits.

6. Un détecteur de coïncidence selon l'une quelconque des revendications 4 ou 5, caractérisé en ce que

un générateur de séquence de bits de commande (20) est connecté à chaque sortie déphasée de la source de signaux de commande d'échantillonneur, et ce générateur de séquence de bits de commande (20) produit, sous l'effet de chaque signal de commande d'échantillonneur, une séquence de bits de commande ayant au moins "N" bits, en désignant par "N" la longueur de la séquence de bits analysée, à une cadence de bit notablement supérieure à la cadence de bit nominale de la séquence de bits analysée, et ces séquences de bits de commande attaquent les registres à décalage respectifs associés (15, 16).

7. Un détecteur de coïncidence selon la revendication 6, dans lequel les générateurs de séquence de bits de commande (20) comprennent des moyens destinés à produire un groupe d'impulsions comportant "N" × (N + 1) impulsions, sous l'effet de chaquen signal de commande d'échantillonneur, en désignant par "N" le nombre de bits dans une séquence de bits analysée.

8. Un détecteur de coïncidence selon la revendication 7, dans lequel les générateurs de séquence de bits de commande (20) comprennent des moyens destinés à supprimer une impulsion sur (N + 1) dans le train d'impulsions de commande qui attaque les registres à décalage (15, 16).

9. Un détecteur de coïncidence selon la revendication 8, dans lequel chaque générateur de séquence de bits de commande (20) produit une impulsion de rang (N + 1) dans la séquence de bits de commande, et cette impulsion est transmise de façon à restaurer un comparateur correspondant (17).

10. Un détecteur de coïncidence selon la revendication 9, dans lequel chaque bascule d'enregistrement d'indication de coïncidence (19) est connectée de façon à etre restaurée par les signaux de commande d'échantillonneur qui sont appliqués à son échantillonneur respectif (14).

11. Un détecteur de coïncidence selon l'une quelconque des revendications précédentes, caractérisé en ce que

le générateur de signal de sortie de commande comprend "P" portes ET (30, 31, 32), ayant chacune (P − 1) entrées, en désignant par "P" le nombre de signaux de commande d'échantillonneur ayant des phases différentes, une porte OU (36) connecte les sorties de ces portes ET à un compteur de sortie (38), et un dispositif à seuil numérique (41) est connecté entre ce compteur de sortie et une ligne de signal de sortie de commande.

12. Un détecteur de coïncidence selon la revendication 11, caractérisé en ce que

le dispositif à seuil numérique (41) fournit un signal lorsque le compte dans le compteur de sortie associé a une valeur prédéterminée supérieure à 1 et inférieure à "N", en désignant par "N" le nombre de bits dans le train de bits analysé.

13. Un détecteur de coïncidence selon l'une quelconque des revendications 1 à 5, caractérisé en ce que

le générateur de signal de sortie de commande (figure 3) comprend:

des portes ET (33, 34, 35) ayant un premier ensemble d'entrées attaquées respectivement par une bascule différente parmi les bascules d'enregistrement d'indication de coïncidence (19) et un autre ensemble d'entrées attaquées par les signaux de commande d'échantillonneur de phase correspondante, une porte OU (37) qui connecte les sorties de ces portes ET (33, 34, 35) à un compteur de sortie (40), et un dispositif à seuil numérique (42) connecté entre la sortie du compteur de sortie (40) et une ligne de signal de sortie de commande, ce dispositif à seuil (42) appliquant un signal à la ligne de signal de sortie de commande lorsque le compte présent dans le compteur de sortie (40) dépasse une valeur numérique prédéterminée M supérieure à 1 et inférieure à "N", en désignant par N le nombre de bits dans l'échantillon de bit analysé.

14. Un détecteur de coïncidence selon la revendication 13, caractérisé en ce que le dispositif à seuil (42) peut être réglé de façon à fonctionner avec différentes valeurs numériques prédéterminées M et M', la valeur M' étant inférieure à M.

15. Un détecteur de coïncidence selon la revendication 14, caractérisé en ce que la ligne de signal de commande de sortie attaque un circuit de retard de maintien de signal (44), le seuil numérique du dispositif à seuil numérique réglable (42) est normalement au niveau de seuil le plus élevé, M, et l'apparition d'un signal à la sortie du circuit de retard de maintien de signal (44) a pour effet de réduire la valeur numérique afin de faire fonctionner le dispositif à seuil (42) avec une valeur inférieure, M'.

16. Un détecteur de coïncidence selon la revendication 15, considérée conjointement à l'une quelconque des revendications 11—12, caractérisé en ce que les lignes de sortie qui proviennent des dispositifs à seuil numériques (41, 42) sont connectées par une porte OU (43) à l'entrée du circuit de retard de maintien de signal (44).

## Patentansprüche

1. Koinzidenzdetektor für Bit-Sequenzen, bei dem eine ankommende Bit-Sequenz, die eine vorbestimmte nominelle Bit-Rate aufweist, mit einer Referenz-Bit-Sequenz verglichen wird, gekennzeichnet durch

mehrere Binärbit-Probenentnehmer bzw. Samplers (14), die jeweils entsprechende individuelle Eingänge aufweisen, die mit der ankommenden Bit-Sequenz parallel geschaltet sind, und die jeweils eine Ausgangsgröße liefern, die den Binärwert der Eingangs-Bit-Sequenz bei einer Folge von Probenentnahmezeiten darstellen, die durch ein zugeführtes Samplersteuereingangssignal definiert sind, eine Quelle (11, 12) von phasenverschobenen Samplersteuersignalen, die mit einer Frequenz wiederkehren, die der nominellen Bit-Rate angenähert ist, mit entsprechenden mehreren phasenverschobenen Ausgängen, die jeweils mit einem entsprechenden Samplersteuersignaleingang verbunden sind,

mehrere Bit-Speicherregister (15, 16), wobei jedes Register mit dem entsprechenden Ausgang eines entsprechenden Samplers (14) verbunden ist zum Speichern einer Folge von Ausgangssignalwerten von seinem entsprechenden Sampler (14),

mehrere Komparatoren (17), die jeweils einen ersten Eingang, der zum Empfang der sequentiell verschobenen Ausgangsgrößen von einem entsprechenden Bit-Speicherregister (15, 16) verbunden ist, und einen zweiten Eingang zum Empfangen einer Sequenz von Referenzsignalen, die synchron mit der Sequenz von dem ersten Eingang zugeführten Signalen zu vergleichen ist, und ferner einen Ausgang aufweisen, der nach einer vorbestimmten Anzahl von aufeinanderfolgenden günstigen Bit-Vergleichen ein Ausgangssignal liefert,

einen Referenz-Bit-Sequenzgeber (18), der mit den zweiten Eingängen der Komparatoren (17) verbunden ist,

mehrere Koinzidenzanzeigespeicher-Einrasteinrichtungen (19), die jeweils mit einem entsprechenden Ausgang der Komparatoren (17) verbunden sind, und

eine Steuerausgangssignale erzeugende Einrichtung (Fig. 3), die mit den Koinzidenzanzeigespeicher-Einrasteinrichtungen (19) verbunden sind zum Erzeugen eines vorbestimmten Signals bei einer vorbestimmten logischen Kombination der Inhalte der mehreren Koinzidenzanzeigespeicher-Einrasteinrichtungen (19).

2. Koinzidenzdetektor nach Anspruch 1, dadurch gekennzeichnet, daß die Quelle der phasenverschobenen Samplersteuersignale Mittel enthält zum Erzeugen von "P" unterschiedlich phasenverschobenen Ausgangssignalen, wobei "P" eine ungerade Zahl ist, und daß die Steuerausgangssignale erzeugende Einrichtung (Fig. 3) Mittel enthält zum Emittieren eines Signals bei dem Vorhandensein von günstigen Koinzidenzanzeigen, die in einer Mehrzahl der Koinzidenzanzeigespeicher-Einrasteinrichtungen (19) gespeichert sind.

3. Koinzidenzdetektor nach Anspruch 2, dadurch gekennzeichnet, daß der Referenz-Bit-Sequenzgeber (18) getrennte Quellen enthält, die jedem Komparator individuell zugeordnet sind.

4. Koinzidenzdetektor nach Anspruch 1, dadurch gekennzeichnet, daß die Bit-Speicherregister (15, 16) Schieberegister sind.

5. Koinzidenzdetektor nach Anspruch 4, dadurch gekennzeichnet, daß die Schieberegisterschleife eine Kapazität von "N" Bits hat.

6. Koinzidenzdetektor nach Anspruch 4 oder 5, dadurch gekennzeichnet, daß ein Steuerbit-Sequenzgenerator (20) mit jedem phasenverschobenen Ausgang der Samplersteuersignalquelle verbunden ist und daß der Steuerbit-Sequenzgenerator (20) bei jedem Sampersteuersignal eine Steuerbit-Sequenz mit wenigstens "N" Bits, wobei "N" die Länge der analysierten Bit-Sequenz ist, bei einer Bit-Rate erzeugt, die wesentlich größer als die nominelle Bit-Rate der analysierten Bit-Sequenz ist, und daß die Steuerbit-Sequenzen die entsprechenden zugeordneten Schieberegister (15, 16) ansteuern.

7. Koinzidenzdetektor nach Anspruch 6, dadurch gekennzeichnet, daß die Steuerbit-Sequenzgeneratoren (20) Mittel enthalten zum Erzeugen einer Pulsgruppe mit "N" x (N + 1) Pulsen bei jedem Samplersteuersignal, wobei "N" die Anzahl der Bits in einer analysierten Bit-Sequenz ist.

8. Koinzidenzdetektor nach Anspruch 7, dadurch gekennzeichnet, daß die Steuerbit-Sequenzgeneratoren (20) Mittel enthalten zum Unterdrücken von jedem (N + 1)ten Puls in der Steuerpulskette, die die Schieberegister (15, 16) ansteuert.

9. Koinzidenzdetektor nach Anspruch 8, dadurch gekennzeichnet, daß die Steuerbit-Sequenzgeneratoren (20) jeweils einen (N + 1)ten Puls in der Steuerbit-Sequenz erzeugen, der zum Rücksetzen eines entsprechenden Komparators (17) verbunden ist.

10. Koinzidenzdetektor nach Anspruch 9, dadurch gekennzeichnet, daß jede Koinzidenzanzeigespeicher-Einrasteinrichtung (19) so verbunden ist, daß sie durch die Samplersteuereingangssignale zu ihrem entsprechenden Sampler (14) rückgesetzt wird.

11. Koinzidenzdetektor nach einem der Ansprüche 1 bis 10, dadurch gekennzeichnet, daß die Steuereingangssignale erzeugende Einrichtung "P" AND-Gatter (30, 31, 32) mit jeweils (P − 1) Eingängen aufweist, wobei "P" die Anzahl der unterschiedlich phasenverschobenen Samplersteuersignale ist, ein OR-Gatter (36) die Ausgänge der AND-Gatter mit einem Ausgangszähler (38) verbindet und eine numerische Schwellwerteinrichtung (41) zwischen den Ausgangszähler und eine Steuerausgangssignalleitung geschaltet ist.

12. Koinzidenzdetektor nach Anspruch 11, dadurch gekennzeichnet, daß die numerische Schwellwerteinrichtung (41) ein Signal liefert, wenn der Zählwert in dem zugeordneten Ausgangszähler einen vorbestimmten Wert größer als 1 und kleiner als "N" hat, wobei "N" die Anzahl der Bits in der analysierten Bit-Kette ist.

13. Koinzidenzdetektor nach einem der Ansprüche 1 bis 5, dadurch gekennzeichnet, daß die Steuerausgangssignale erzeugende Einrichtung (Fig. 3) enthält:

AND-Gatter (33, 34, 35) mit einem ersten Satz von Eingängen, die von jeweils einem anderen der Koinzidenzanzeigespeicher-Einrasteinrichtungen (19) gespeist werden, und einem zweiten Satz von Eingängen, die mit den entsprechenden Phasensampler-Steuersignalen gespeist werden, ein OR-Gatter (37), das die Ausgänge der AND-Gatter (33, 34, 35) mit einem Ausgangszähler (40) verbindet, und eine numerische Schwellwerteinrichtung (42), die zwischen den Ausgang des Ausgangszählers (40) und eine Steuerausgangssignalleitung geschaltet ist, wobei die Schwellwerteinrichtung (42) ein Signal an die Steuerausgangssignalleitung liefert, wenn der Zählwert in dem Ausgangszähler (40) einen vorbestimmten numerischen Wert M größer als 1 und kleiner als "N" überschreitet, wobei N die Anzahl von Bits in der analysierten Bit-Probenentnahme ist.

14. Koinzidenzdetektor nach Anspruch 13, dadurch gekennzeichnet, daß die Schwellwerteinrichtung (42) setzbar ist, damit sie bei verschiedenen vorbestimmten numerischen Werten M und M′ arbeitet, wobei M′ kleiner als M ist.

15. Koinzidenzdetektor nach Anspruch 14, dadurch gekennzeichnet, daß die Ausgangssteuersignalleitung eine Signalaufrechterhaltungs-Verzögerungsschaltung (44) speist, wobei der numerische Schwellwert der setzbaren numerischen Schwellwerteinrichtung (42) normalerweise auf dem höheren Schwellwertpegel M ist und das Auftreten eines Signals am Ausgang der Signalaufrechterhaltungs-Verzögerungsschaltung (44) die Funktion hat, den numerischen Wert zu senken, um die Schwellwerteinrichtung (42) auf einen kleineren Wert M′ zu bringen.

16. Koinzidenzdetektor nach Anspruch 11, 12 oder 15, dadurch gekennzeichnet, daß die Ausgangsleitungen von den numerischen Schwellwerteinrichtungen (41, 42) über ein OR-Gatter (43) mit dem Eingang zu der Signalaufrechterhaltungs-Verzögerungsschaltung (44) verbunden sind.

FIG.1A

FIG.1B

2

FIG.2

FIG. 3

FIG. 4

0035564